# EUROPEAN PATENT APPLICATION

(11) **EP 4 765 732 A1**
(43) Date of publication of application: **24.06.2026**
(21) Application number: 24222776.7
(22) Date of filing: 23.12.2024
(51) Int. Cl.: H04L 9/40, G06Q 20/36, H04L 9/00

(54) **IDENTITY MANAGEMENT OF A USER UNIT**

(71) Applicant: Siemens Aktiengesellschaft, 80333 München (DE); Robert Bosch GmbH, 70839 Gerlingen-Schillerhöhe (DE)
(72) Inventor: Coptil, Florin, 71397 Leutenbach (DE); Folkendt, Werner, 74321 Bietigheim-Bissingen (DE); Kasinathan, Prabhakaran, 81549 München (DE); Shams, Saad Bin, 81549 München (DE); Subrahmanyam, Niranjana, 85540 Haar (DE); Wimmer, Martin, 85579 Neubiberg (DE); van Gelder, Fabian, 20539 Hamburg (DE)
(74) Representative: Maier, Daniel Oliver

(57) **Abstract**

The invention relates to a method for managing an identity of a user unit (UU) with respect to a first entity (E1) and a second entity (E2). The method comprises:
- providing (M1) a digital user unit wallet (DW) being associated with the user unit (UU),
- assigning (M2) first relationship credential being associated with the first entity (E1) to the user unit (UU) and storing the first relationship credential in the digital user unit wallet (DW),
- assigning (M3) a second relationship credential being associated with the second entity (E2) to the user unit (UU) and storing the second relationship credential in the digital user unit wallet (DW).

Based on this identity management, where two relationship credentials with respect to two entities are assigned to a user unit, the user unit may for example use decentralized applications which are associated with both entities.

## Description

The present invention relates to a method for managing an identity of a user unit with respect to a first and a second entity. Moreover, the invention relates to a corresponding identity management system. Further, the invention relates to a computer program product comprising a program code for executing a method for managing an identity of a user unit with respect to a first and a second entity.

For different application scenarios, it is necessary that entities are able to establish and evaluate trust in other entities. For that, the verification of identities of other entities is required. This may be particularly crucial for decentralized applications which are hosted and/or operated by different entities, and which are used by units of different entities. A decentralized application in this context may be an application, such as a software application, being run and/or operated on side of different entities, e.g., application providers, servers of different providers or companies, etc. For example, a root instance may be the creator or owner of an application. To address user needs (e.g., users are asking for possibilities to keep full control over their data and, hence, are unwilling to delegate operations and data storage and management to a central authority), the application may be set up as one or more decentral application instances. This means that a decentral application instance or decentralized application may be provided and operated by a first entity and may be used by a second entity or users of the second entity. When several instances of the decentralized application are operated, they are interconnected to exchange information (e.g., in supply chain scenarios). Further, decentralized applications may run on several computers or servers instead of a single computer, for example on a blockchain network with nodes that belong to different entities.

An identity management within such decentralized applications is necessary so that user units of different entities can interact with applications of different entities or be operated by multiple entities. Currently, there exist different possibilities as will be described in the following.

Known are for example identity management systems based on public key infrastructures (PKI). Such a PKI system allows the creation of verifiable identities for entities or units based on digital certificates, where an entity's identity is bound to a public/private key pair. The core trust is anchored through a Certificate Authority (CA) which establishes this binding of public keys to entities in the form of a certificate. The CA performs due diligence before issuing a signed digital certificate to an entity. The digital signature on the certificate bears proof of this due diligence process.

In contrast, in a Self-Sovereign Identity (SSI) ecosystem based on Decentralized Identifiers (DIDs) and Verifiable Credentials (VCs), entities (natural persons or organizations using application servers or the like) can create, manage, assert, and prove their own identities and associated credentials to third party verifiers. The verifier can verify that the holder (i.e., usually a natural person having access to a wallet storing private cryptographic key material associated with a DID) has a credential issued by a trusted issuer. The core of this trust lies with the issuer, i.e., the verifier expects that the issuer follows well-defined processes by checking all required formalities before issuing a credential to a holder. This forms the basis of trust of a verifier in a particular issuer. A particular verifier would trust an issuer only if the issuer's processes and policies of checking identity information align with that of the verifier.

The philosophy of identity management in the SSI world compared to federated identity management systems is that, in the SSI space, the entity itself has control over its identity information, and it can choose to share or not to share a part of it with a particular entity. Consequently, in the SSI space the identity management is entity-centric and privacy focused.

However, in decentralized applications, it is important to identify the authenticity of the entity (i.e., the organization or a legal person acting on behalf of the organization owning the entity) behind a DID identifier. Right now, trust within the decentralized applications and networks are established via identities created and managed by a consortium of initial members operating a decentralized network. Thus, identities created and issued to entities (e.g., servers or the like owned/operated by organizations) within such networks do not necessarily have any legal significance. Furthermore, onboarding, i.e., adding, a new entity in a decentralized application in an automated, i.e., digital manner, requires a cross domain trust.

Currently, onboarding new entities or user units in a decentralized application is typically done through manual and human based verification of documents. Such checks may include the following steps, but this is not necessarily an exhaustive list:
- A user unit applies for an account in the decentralized application.
- The system administrator verifies the existence of the company/entity corresponding to the user unit that applied. This can be achieved through different means, such as verifying the address of the entity, the domain of the email address they applied through, etc.
- The system administrator verifies that the user unit in question is allowed to participate/work with the entity that owns the decentralized application under its export control policy.
- The system administrator creates an account for the user unit in the application if the verification is successful.

A typical challenge of the described approach is that the exchanged information which needs to be verified is not provided together with strong verification methods such as cryptographically verifiable information - but often paper based. The disadvantages of this are:
- The application administrator/operator must rely on other correlating data to reach a conclusion - which could be an error prone step.
- The verification process is time-consuming, again as it often relies on manual interaction.

It should be noted that independent of the grammatical term usage, individuals with male, female or other gender identities are included within the term.

Thus, it is one object of the present invention to provide an improved approach for automatically adding or onboarding a user unit to an existing decentralized application, where the user unit and the decentralized application are associated with multiple entities.

According to a first aspect, a method for managing an identity of a user unit with respect to a first entity and a second entity is provided. The method comprises:
- providing a digital user unit wallet being associated with the user unit,
- assigning a first relationship credential being associated with the first entity to the user unit and storing the first relationship credential in the digital user unit wallet,
- assigning a second relationship credential being associated with the second entity to the user unit and storing the second relationship credential in the digital user unit wallet.

As described above, the first and the second entity in this context may be a server or the like, wherein each entity is operated by a different provider/company. The user unit may be any kind of computational unit being used by a user, wherein the user and the user unit are assigned to one of the entities. In the following, it will be assumed that the user unit is assigned to the second entity or belongs to the second entity.

In order to manage an identity of the user unit, a digital user unit wallet is provided. A digital wallet in this context refers to a storage or repository in which identity information of the respective element, for example the user unit, may be stored securely. The identity information may be a unique identifier of the respective element and may also contain so called relationship credentials, which define a relationship (also called link, interrelation, or connection) between the respective element and the remaining components or elements of an overall system. In this context, the relationship credential may for example define the relationship between the user unit and the first and/or second entity. Such a relationship credential thus may specify that the respective entity trusts the owner, for example the user unit, of the credential. The relationship credentials in this context may be for example so called verifiable credentials. For example, verifiable credentials as defined in the Verifiable Credentials Data Model v2.0 (see https://www.w3.org/TR/vc-data-model-2.0/) may be used.

As described above, for example, when operating decentralized applications, it may be necessary to authenticate a user unit with respect to different entities. For example, the first entity may need to identify whether the user unit is allowed to use applications provided by the first entity. The same applies to the second entity. Particularly, in the case of decentralized applications, where different entities participate in the operation, provision, hosting etc. of an application, it is necessary that different entities are able to verify or authenticate the user unit. In order that the user unit is not required to disclose its information to each entity, the here described method provides a kind of double identity approach. This means that the user unit has a separate relationship credential for each entity, wherein the first relationship credential defines the relationship between the user unit and the first entity, and the second relationship credential defines the relationship between the user unit and the second entity. The respective relationship credential may for example be issued by the respective entity. The first relationship credential may particularly indicate that the first entity has trust in the user unit and the second relationship credential may indicate that the second entity has trust in the user unit. Based on these relationship credentials stored in the digital wallet and the corresponding trust level or reliability associated to it, the user unit may then cooperate with the first and the second entity as well as with applications or other instances being derived from the first and the second entity.

The method thus provides an efficient approach for adding a user unit into a system comprising at least the first and the second entity and provides a simple way of providing a trustworthy communication or cooperation between a user unit and several entities. It should be noted that the method may be easily extended to more than two entities and/or more than one user unit.

According to an embodiment, the user unit is assigned to the second entity. Thus, the user unit may be directly linked to the second entity, by for example being part of the network or the like of the second entity.

According to a further embodiment, the method further comprises providing and operating a decentralized application by the first entity, wherein the user unit uses the decentralized application using the first and the second relationship credential. As already described above, such a decentralized application may be any kind of software application being provided by one of the entities, in the following for example by the first entity. This means that the first entity provides and owns the decentralized application. As the first relationship credential associated with the first entity is assigned to user unit, the user unit may use the decentralized application and may authenticate itself as being trusted by the first entity, i.e., as having the permission to use the decentralized application or to operate with or have access to the decentralized application. In addition, due to the second relationship credential associated with the second entity, the user unit may also authenticate itself as belonging to the second entity and as being trusted by the second entity. Based on these two different proofs of identity information (i.e., the first and the second relationship credential), it is possible for a user unit to cooperate with the decentralized application being associated with different entities.

According to a further embodiment, a digital application wallet is assigned to the decentralized application, wherein an application relationship credential being associated with the first entity is assigned to the decentralized application and is stored in the digital application wallet. Thus, not only the user unit is in possession of a digital wallet, but also the decentralized application. The digital wallet of the decentralized application and the application relationship credential stored therein may serve as an authentication and verification of the decentralized application, for example to verify that the decentralized application belongs to the first entity. Further, the application relationship credential may be used for deriving any dependent credentials, which will be described below in further detail.

According to a further embodiment, the method further comprises validating the first and the second relationship credential of the user unit before allowing usage of the decentralized application. This double-check validation may ensure that the relationship credentials to both entities involved in the operation of the decentralized application are valid and thus that both entities have authenticated the user unit and therewith authorize usage of the decentralized application by the user unit. If one of the relationship credentials cannot be validated, for example because of having been revoked, withdrawn, expired, etc., the user unit might not be allowed to use the decentralized application. In this case, the user unit may for example receive a corresponding warning message that one of the relationship credentials is not valid anymore.

According to a further embodiment, the decentralized application provides a decentralized application instance (so called satellite application), wherein a digital application instance wallet is assigned to the decentralized application instance, wherein an application instance relationship credential being associated with the decentralized application is assigned to the decentralized application instance and is stored in the digital application instance wallet.

Applying the described identity management approach may allow to set up application architectures that excel through distributed deployments and decentralized operation schemes. That is, application instances can be operated by different entities which allows keeping control of data and functionality (such as certain application logic, e.g., AI models). This is beneficial, e.g., to fulfill regulatory requirements (e.g., data provisioning) and customer needs (e.g., keeping control of corporate proprietary data) and, hence, contributes to a good customer acceptance rate.

According to a further embodiment, the decentralized application issues the first relationship credential for the user unit directly or indirectly via the decentralized application instance. Thus, the decentralized application may issue the first relationship credential and may provide it to the user unit directly. This may be the case for both embodiments, with or without decentralized application instance. In this case, the first relationship credential is derived from and refers back to the decentralized application and thus to the first entity which owns the decentralized application. Alternatively, the decentralized application instance may issue the first relationship credential which is derived from and refers back to the decentralized application instance, from the decentralized application instance to the decentralized application and from the decentralized application to the first entity. Thus, in any case, the first relationship credential is associated with the first entity, either directly or indirectly via the decentralized application and/or the decentralized application instance.

Using the decentralized application and the decentralized application instance(s) allows to establish relationships between the decentralized application instance(s), also called satellite applications, and the decentralized application (serving as a central application for the dependent instances). E.g., this may be advantageous for license management: if a customer operates a decentralized application instance and has a license for it, this is realized via a corresponding credential issued by the decentralized application. If the license expires or the contract is terminated, the corresponding credential is revoked and the decentralized application instance, i.e., the satellite application, can no longer be used.

According to a further embodiment, the digital user unit wallet is associated with the first entity and is hosted by the decentralized application, the decentralized application instance or by the second entity. In a further embodiment, the digital application wallet is associated with the first entity and is hosted by the decentralized application or by the second entity. Furthermore, the digital application instance wallet may be associated with the first entity and may be hosted by the decentralized application or by the second entity.

Thus, the hosting of the different digital wallets may be concentrated on one participating element of the overall system or may be distributed to the different participating elements. For example, when the application hosts the wallets of the user unit, the decentralized application and optionally the decentralized application instance, this may provide the advantage that no changes on current systems are required. However, the second or further entities may be required to transfer their credentials to the application being owned and/or operated by the first entity. In case the second entity hosts the wallet of the user unit, this may provide complete control to the second entity over the wallet of its user unit(s).

However, advantageously, this control is insofar restricted as the control over the first relationship credential, i.e., the credential defining the relationship between the user unit and the first entity, remains at the first entity or the decentralized application or decentralized application instance being descendants of the first entity. This control may for example be implemented by that the first relationship credential is withdrawable by the first entity and/or that the second relationship credential is withdrawable by the second entity. Thus, each entity may be responsible for the relationship credential associated with the respective entity and may thus control whether the user unit is allowed to use the decentralized application or not.

According to a further embodiment, the first entity and the second entity trust each other based on a previous mutual verification. Such a mutual verification may be based on any known verification method, for example by verification or authentication through a certificate authority. This mutual verification and trust may be used when issuing the relationship credentials as each entity trusts the other entity and thus also trusts credentials defining or specifying a relationship to the respective entity.

The above-described method thus may provide the following advantages:
- Decentralized applications can use relationship credentials (for example in the form of legal digital organizational identifiers recognized by governmental authorities) to identify and interact with user units and entities
- The onboarding process may be improved by reducing the time for the onboarding process (as new relationship credentials may be easily issued for new user units as each entity provides (directly or indirectly) its own relationship credentials which are then used combined with the relationship credentials of other entities for verifying the trustworthiness of a user unit or any other element within a system), reducing costs of manual inspection of an authenticity of an element in a decentralized SSI domain (as the relationship credentials may be easily and automatically inspected and verified).
- The introduced identity management and representation (e.g., corresponding wallets) allow an efficient and secure setup of decentralized applications, i.e., applications that form a network of dependent satellite applications. This may refer for example to:
   ∘ Ease of onboarding (automation): Setup and onboarding of decentralized application instances (so-called satellite applications) which can be deployed and operated by the application owner, i.e., one of the entities, such as a service provider.
   ∘ Shared responsibility: Operation of the overall application network based on a shared responsibility model with possible central control by the application owner/entity and self-management on side of users (other entities or user units).
   ∘ Rights delegation: The described method and corresponding system is easily scalable in different hierarchies, for example the second entity may build a subnetwork with further decentralized application instances and so on. By using a suitable access control/authorization model, the second entity (i.e., the entity which acts as a customer for the decentralized application provided by the first entity) may build up sub-identities and sub-application instances for its subsidiaries, i.e., for its sub-entities.
- Elements using decentralized applications, for example the user unit, can have complete control over their identities (i.e., wallets and any credentials stored in the wallets) even though they are created and managed at least partially by an external entity, thus the user unit may keep full control of its data.

According to a further aspect, a management system for managing the identity of a user unit with respect to a first entity and a second entity is provided. The system comprises a first entity and a second entity, a user unit of the second entity, a digital user unit wallet being associated with the user unit, wherein a first relationship credential being associated with the first entity is assigned to the user unit and stored in the digital user unit wallet, and wherein a second relationship credential being associated with the second entity is assigned to the user unit and stored in the digital user unit wallet.

The respective element or entity, e.g., the first and the second entity or the user unit, may be implemented in hardware and/or in software. If said element is implemented in hardware, it may be embodied as a device, e.g., as a computer or as a processor or as a part of a system, e.g., a computer system. If said element is implemented in software, it may be embodied as a computer program product, as a function, as a routine, as a program code or as an executable object.

According to a further embodiment, the second entity comprises a plurality of user units, wherein an individual digital user unit wallet is assigned to each user unit and comprises a first relationship credential of the first entity for the respective user unit and a second relationship credential of the second entity for the respective user unit. Thus, the management system is arbitrary scalable, with respect to the number of user units as well as the number of entities or decentralized applications.

The embodiments and features described with reference to the method of the present invention apply mutatis mutandis to the system of the present invention.

According to a further aspect, the invention relates to a computer program product comprising a program code for executing the above-described method for managing an identity of a user unit when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows an exemplary embodiment of an identity management system and corresponding method;
- Fig. 2: shows the identity management system and corresponding method of Fig. 1 with additional elements; and
- Fig. 3: shows the identity management system and corresponding method of Figs. 1 and 2 with further additional elements.

In the Figures, like reference numerals designate like or functionally equivalent elements, unless otherwise indicated.

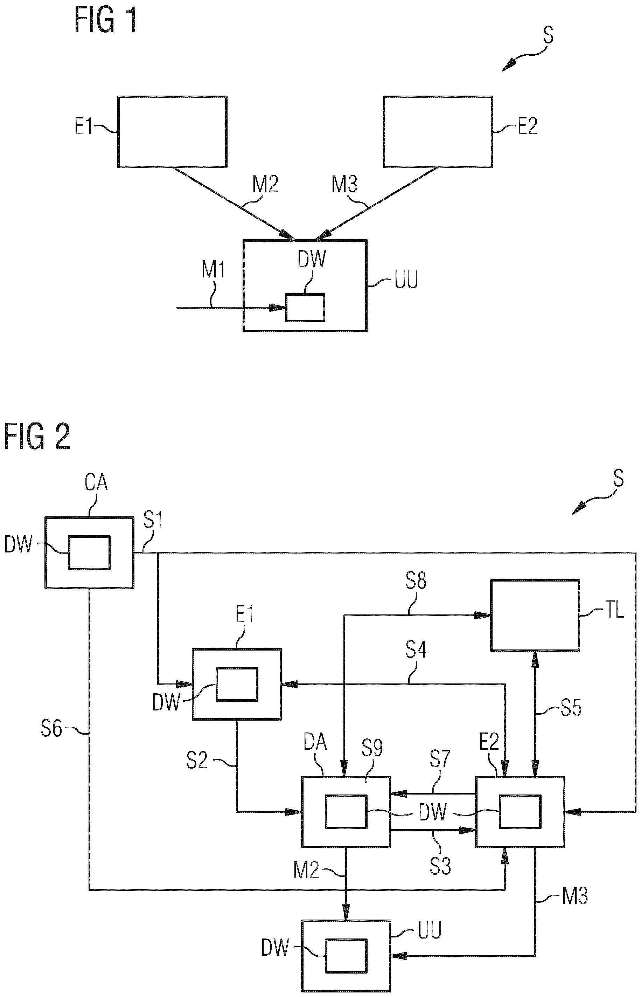

Fig. 1 shows an identity management system S for managing the identity of a user unit UU with respect to a first entity E1 and a second entity E2. It should be noted that the system S may comprise more than two entities and may also comprise more than one user unit.

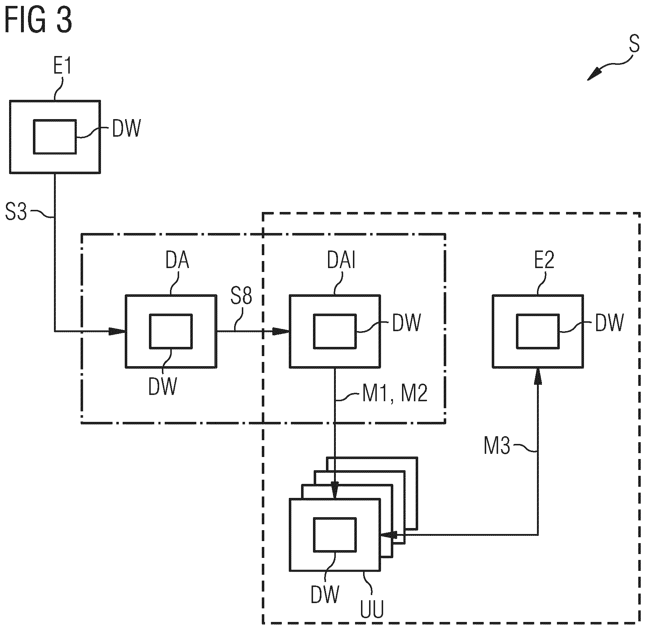

The first entity E1 and the second entity E2 may be for example service or application provider, servers, etc. In the following, it is assumed that the first entity E1 provides a decentralized application DA, which will be described with reference to Figs. 2 and 3, and that the user unit UU belongs to the second entity E2, is for example part of the network of entity E2.

In order to allow a communication or use of applications of both entities E1 and E2 by the user unit UU, a decentralized authentication approach is used. This means that the user unit UU is authenticated by both entities E1, E2 to have the right to access applications and the like of both entities E1, E2.

For this purpose, in a first step M1, a digital wallet DW is assigned to the user unit UU. In this wallet DW, any kind of identity or authentication information may be stored. In a second step M2, a first relationship credential is stored in the digital wallet DW of the user unit UU. This first relationship credential is associated with the first entity E1 and defines that there exists a trusted relationship between the user unit UU and the first entity E1. In a third step M3, a second relationship credential is stored in the digital wallet DW of the user unit UU. This second relationship credential is associated with the second entity E2 and defines that there exists a trusted relationship between the user unit UU and the second entity E2. Based on these two relationship credentials, the user unit UU may access, use or operate with applications, databases etc. of both entities E1, E2, either related to one of the entities or being related to both entities. In the first case, only one relationship credential with respect to respective entity needs to be valid, in the second case, both relationship credentials need to be valid.

Fig. 2 now describes the system and method of Fig. 1 in a more detailed way.

As a starting point, trust is established between the first and the second entity E1, E2. For this, a respective credential DID1, DID3 is used to the first entity E1 and the second entity E2 by a certifying authority CA in step S1.

By using a trusted certifying authority CA, a high degree of level of assurance for the identity of the respective entity and corresponding credential can be guaranteed. For example, an Organizational Digital Identity (ODI) may be used.

A CA in this context is an entity that issues top-level credentials for organizations (i.e., LPIDs). There may be several of these (i.e., not just one CA). The TL is used to establish trust in these CAs. This means that the TL includes a list of trusted CAs. This makes it possible to efficiently establish trust across organizations or entities (i.e., if everyone trusts the same TL).

The credential may be stored in digital wallets DW, e.g., Legal European Digital Identity Wallet (EUDIW), which may have a unique wallet identifier (DID), and which may store the cryptographic keys for sealing and issuing credentials. The assigned credentials may be for example Organizational Identity Credentials (Legal Person Identifier (Legal PID)), which may be used for mutual authentication between the wallets of legal entities to establish initial trust and which may bind the wallet identifier to a unique legal entity identifier.

It should be noted that in the following, all elements and components may have their own unique digital wallet DW for storing any kind of identity information, even if not explicitly described.

The first entity E1 now owns and operates a decentralized application DA. In step S2, an application relationship credential DID2 is assigned to the decentralized application D1, defining the relationship between the first entity E1 and the decentralized application DA.

In step S3, this application DA may authenticate itself with the second entity E2 based on the application relationship credential DID2. The second entity E2 may request the credential DID1 from the first entity E1 in step S4 and may then check this credential DID1 with a trusted list TL in step S5.

In step S6, in case the entity 2 has not already received a relationship credential DID3 from the certifying authority CA, the certifying authority CA may issue now a relationship credential DID3 to the second entity E2, which is presented in step S7 from the second entity E2 to the decentralized application DA. In step S8, the decentralized application DA checks whether the certifying authority CA issuing the relationship credential DID3 is in the trusted list TL. After these steps have been successfully completed, the decentralized application DA may finish the onboarding process in step S9.

The steps S1 to S9 may thus be used for establishing a trusted relationship between the first entity E1 and the second entity E2, as well as for onboarding decentralized applications DA into the system S.

As shown in Fig. 2, the digital wallet DW of the user unit UU and the first relationship credential of the user unit UU may be instantiated by the decentralized application DA (steps M1 and M2). Thus, in this case, the first relationship credential is indirectly derived from the first entity E1.

The user unit UU may further request the second relationship credential from the second entity E2 which may then issue the second relationship credential in step M3. The user unit UU and the corresponding digital wallet DW may either be hosted by the decentralized application DA or by the second entity E2.

Steps M1 to M3 may be repeated for as many user units UU as needed.

As shown in Fig. 3, a decentralized application instance DAI may be used which is inserted between the decentralized application DA and the user unit UU. As illustrated in Fig. 3, there may be a plurality of user units UU.

In this case, the decentralized application DA instantiates the decentralized application instance DAI and further instantiates the digital wallet DWof the decentralized application instance DAI and the corresponding application instance relationship credential in step S8. Further, the decentralized application DA issues the first relationship credential for the user unit UU, but the decentralized application instance DAI.

The decentralized application instance DAI may be operated by the owner of the decentralized application DA, i.e., the first entity E1, but may run on a server, virtual machine, or the like of the second entity E2. This is illustrated by two different dashed boxes, indicating that the decentralized application DA and the decentralized application instance DAI are owned together by the first entity E1, whereas the decentralized application instance DAI and the user unit(s) UU are hosted by the second entity E2.

Based on the above system S and management method, it is possible that a user unit UU may easily operate with a decentralized application DA based on two relationship credentials. As the relationship credentials are associated with the two entities, which have full control over their issued credentials, the decentralized application DA may authenticate the user unit UU with respect to both entities. Further, due to the full control, each entity E1, E2 may separately manage their credentials and thus may revoke a credential one-sided. Thus, when one entity decides that a user unit is not anymore allowed to use a specific decentralized application, this entity may revoke or withdraw the respective relationship credential and may thus prohibit the use of the decentralized application by this user unit.

The method and system thus provide an easy and comprehensive way of managing access rights to decentralized applications.

Although the present invention has been described in accordance with preferred embodiments, it is obvious for the person skilled in the art that modifications are possible in all embodiments.

### List of Reference

- CA: Certifying authority
- DA: decentralized application
- DAI: decentralized application instance
- DW: digital wallet
- E1: first entity
- E2: second entity M1-M3method steps
- S: system
- S1-S9: method steps
- TL: trusted list
- UU: user unit

## Claims

1. A method for managing an identity of a user unit (UU) with respect to a first entity (E1) and a second entity (E2), the method comprising
- providing (M1) a digital user unit wallet (DW) being associated with the user unit (UU),
- assigning (M2) a first relationship credential being associated with the first entity (E1) to the user unit (UU) and storing the first relationship credential in the digital user unit wallet (DW),
- assigning (M3) a second relationship credential being associated with the second entity (E2) to the user unit (UU) and storing the second relationship credential in the digital user unit wallet (DW).

2. The method according to claim 1, **characterized in that** the user unit (UU) is assigned to the second entity (E2).

3. The method according to claim 1 or 2, **characterized in that** the method further comprises providing and operating a decentralized application (DA) by the first entity (E1), wherein the user unit (UU) uses the decentralized application (DA) using the first and the second relationship credential.

4. The method according to claim 3, **characterized in that** a digital application wallet (DW) is assigned to the decentralized application (DA), wherein an application relationship credential being associated with the first entity (E1) is assigned (S2) to the decentralized application (DA) and is stored in the digital application wallet (DW).

5. The method according to claim 3 or 4, **characterized in that** the method further comprises validating the first and the second relationship credential of the user unit (UU) before allowing usage of the decentralized application (DA).

6. The method according to any one of the claims 3 to 5, **characterized in that** the decentralized application (DA) provides a decentralized application instance (DAI), wherein a digital application instance wallet (DW) is assigned to the decentralized application instance (DAI), wherein an application instance relationship credential being associated with the decentralized application (DA) is assigned (S8) to the decentralized application instance (DAI) and is stored in the digital application instance wallet (DW).

7. The method according to any one of the claims 3 to 6, **characterized in that** the decentralized application (DA) issues the first relationship credential for the user unit (UU) directly or indirectly via the decentralized application instance (DAI).

8. The method according to any one of the preceding claims, **characterized in that** the digital user unit wallet (DW) is associated with the first entity (E1) and is hosted by the decentralized application (DA), the decentralized application instance (DAI) or by the second entity (E2).

9. The method according to any one of the preceding claims, **characterized in that** the digital application wallet (DW) is associated with the first entity (E1) and is hosted by the decentralized application (DA) or by the second entity (E2).

10. The method according to any one of the preceding claims, **characterized in that** the digital application instance wallet (DW) is associated with the first entity (E1) and is hosted by the decentralized application (DA) or by the second entity (E2).

11. The method according to any one of the preceding claims, **characterized in that** the first relationship credential is withdrawable by the first entity (E1) and/or that the second relationship credential is withdrawable by the second entity (E2).

12. The method according to any one of the preceding claims, **characterized in that** the first entity (E1) and the second entity (E2) trust each other based on a previous mutual verification.

13. A computer program product comprising a program code for executing the method for managing an identity of a user unit (UU) according to any one of the claims 1 to 10, when run on at least one computer.

14. A management system for managing an identity of a user unit (UU) with respect to a first entity (E1) and a second entity (E2), the system comprising
a first entity (E1) and a second entity (E2),
a user unit (UU) of the second entity (E2),
a digital user unit wallet (DW) being associated with the user unit (UU), wherein a first relationship credential being associated with the first entity (E1) is assigned to the user unit (UU) and stored in the digital user unit wallet (DW), and wherein a second relationship credential being associated with the second entity (E2) is assigned to the user unit (UU) and stored in the digital user unit wallet (DW).

15. The management system according to claim 14, **characterized in that** the second entity (E2) comprises a plurality of user units (UU), wherein an individual digital user unit wallet (DW) is assigned to each user unit (UU) and comprises a first relationship credential of the first entity (E1) for the respective user unit (UU) and a second relationship credential of the second entity (E2) for the respective user unit (UU).
